# EUROPÄISCHE PATENTANMELDUNG

(11) **EP 4 064 619 A1**
(43) Veröffentlichungstag der Anmeldung: **28.09.2022**
(21) Anmeldenummer: 21164692.2
(22) Anmeldetag: 24.03.2021
(51) Int. Cl.: H04L 12/40, G05B 19/418

(54) **VERBINDUNGSVORRICHTUNG ZUR DRAHTLOSEN VERBINDUNG EINES MOBILEN GERÄTS MIT EINEM FELDGERÄT**

(71) Anmelder: VEGA Grieshaber KG, 77709 Wolfach (DE)
(72) Erfinder: ISENMANN, Andreas, 77716 Haslach im Kinzigtal (DE); RANK, Fabian, 77793 Gutach (DE)
(74) Vertreter: Maiwald Patent- und Rechtsanwaltsgesellschaft mbH

(57) **Zusammenfassung**

Die Erfindung betrifft ein Messgerät, z.B. ein Feldgerät. Insbesondere betrifft die Erfindung eine Verbindungsvorrichtung (10) zur drahtlosen Verbindung eines mobilen Geräts (31, 32, 33) mit einem ersten Feldgerät (41, 43), das in einem Feldgerätenetz (51, 52, 53) angeordnet ist. Die Verbindungsvorrichtung (10) weist einen Zugangspunkt (12) auf, eingerichtet zur Unterstützung eines drahtlosen Kommunikationsprotokolls; einen Feldgerätenetzanschluss (14), eingerichtet zur Unterstützung eines Feldgerätekommunikationsprotokolls des Feldgerätenetzes (51, 52, 53); und einen Umsetzer (16), eingerichtet zur Übertragung von Daten von dem Zugangspunkt (12) zu dem Feldgerätenetzanschluss (14) und von Daten von dem Feldgerätenetzanschluss (14) zu dem Zugangspunkt (12). Dabei hat der Umsetzer (16) Zugriff auf eine Feldgeräteliste (20) mit einer Feldgeräteidentifikation (21) des ersten Feldgeräts (41, 43).

## Beschreibung

### Gebiet der Erfindung

Die Erfindung betrifft ein Messgerät, z.B. ein Feldgerät, beispielsweise mit einem Sensor zur Füllstandmessung, zur Topologiebestimmung, zur Grenzstandbestimmung, zur Durchflussmessung, zur Druckmessung, zur Distanzmessung, und/oder zur Temperaturmessung. Insbesondere betrifft die Erfindung eine Verbindungsvorrichtung, ein Verfahren, eine Verwendung, ein Programmelement und ein computerlesbares Medium.

### Hintergrund

Zur Füllstandmessung oder zur Grenzstandbestimmung, beispielsweise in einem Behälter, werden verschiedene Arten von Messgeräten, insbesondere von Feldgeräten, eingesetzt. Das Auslesen von Messwerten aus einem Feldgerät, die Konfiguration von Systemkomponenten, etc. kann beispielsweise innerhalb eines industriellen Netzwerkes erfolgen. Jedoch existiert ein zunehmender Bedarf, diese und/oder weitere Aktionen auch drahtlos steuern zu können. Ein Zugangspunkt für eine drahtlose Verbindung kann aber einen höheren Energiebedarf und/oder höhere Kosten verursachen.

### Zusammenfassung

Es ist eine Aufgabe der Erfindung, eine Vorrichtung zur Verfügung zu stellen, welche den drahtlosen Zugriff auf ein Feldgerät ohne drahtlosen Zugangspunkt ermöglicht.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft eine Verbindungsvorrichtung zur drahtlosen Verbindung eines mobilen Geräts mit einem ersten Feldgerät, das in einem Feldgerätenetz angeordnet ist, wobei die Verbindungsvorrichtung eine Kommunikationsverbindung zu dem Feldgerätenetz aufweist. Die Verbindungsvorrichtung weist einen Zugangspunkt auf, der zur Unterstützung eines drahtlosen Kommunikationsprotokolls eingerichtet ist; einen Feldgerätenetzanschluss, der zur Unterstützung eines Feldgerätekommunikationsprotokolls des Feldgerätenetzes eingerichtet ist; und einen Umsetzer, der zur Übertragung von Daten von dem Zugangspunkt zu dem Feldgerätenetzanschluss und von Daten von dem Feldgerätenetzanschluss zu dem Zugangspunkt eingerichtet ist. Dabei hat der Umsetzer Zugriff auf eine Feldgeräteliste mit einer Feldgeräteidentifikation des ersten Feldgeräts.

Ein Feldgerät kann beispielsweise ein Impedanzgrenzschalter, ein Vibrationsgrenzschalter, ein Füllstandmessgerät mit einem Hochfrequenzfrontend, Ultraschallfrontend, LiDAR- oder Laserfrontend oder ein radiometrisches Frontend sein, und/oder eine Anzeigevorrichtung. Feldgeräte sind in vielen Fällen in einem Feldgerätenetz angeordnet, das beispielsweise durch einen Feldbus, durch eine Zweidrahtleitunwg wie z.B. HART (Highway Addressable Remote Transducer), durch Ethernet-APL (Ethernet Advanced Physical Layer) und/oder weitere Netze gebildet wird, die ein Feldgerätekommunikationsprotokoll unterstützen. Ein mobiles Gerät kann beispielsweise ein Tablet, ein Smartphone, ein Laptop und/oder ein proprietäres Steuerungsgerät sein. Das mobile Gerät kann z.B. Protokolle wie WLAN (Wireless LAN), Bluetooth und/oder andere Protokolle mit geringer Reichweite unterstützen, und/oder auch ein Mobilfunknetz, wie z.B. 2G, 3G, 4G und 5G.

Die Verbindungsvorrichtung weist zum einen eine Kommunikationsverbindung zu dem Feldgerätenetz auf, und zum andern einen Zugangspunkt (Access Point, AP) auf, der zur Unterstützung eines drahtlosen Kommunikationsprotokolls, wie z.B. oben beschrieben, eingerichtet ist. Der Zugangspunkt - und/oder die Verbindungsvorrichtung - kann Teil eines dedizierten Zugangsgerätes sein, zum Beispiel ein dediziertes Modul und/oder Teil eines Steuerungsgerätes, wie z.B. einer Leitwarte eines Anlagenbetreibers. Der Zugangspunkt kann Teil eines Feldgeräts und/oder eines anderen Geräts sein.

Die Verbindungsvorrichtung weist einen Feldgerätenetzanschluss auf, der zur Unterstützung eines Feldgerätekommunikationsprotokolls eingerichtet ist. Über den Feldgerätenetzanschluss kann (zumindest prinzipiell) auf das Feldgerät zugegriffen werden. Das Feldgerätenetz, an das der Feldgerätenetzanschluss angeschlossen ist, kann dasselbe Netz oder sogar dasselbe Netzsegment sein, an welches das erste Feldgerät angeschlossen ist. Das erste Feldgerät kann aber auch über ein oder mehrere Gateways und/oder Router angeschlossen sein. Zumindest einige der beteiligten Netze können erhöhte Sicherheitsanforderungen aufweisen, d.h. beispielsweise nur über verschlüsselte Protokolle zugreifbar sein.

Die Verbindungsvorrichtung weist einen Umsetzer auf, der zur Übertragung von Daten von dem Zugangspunkt zu dem Feldgerätenetzanschluss und von Daten von dem Feldgerätenetzanschluss zu dem Zugangspunkt eingerichtet ist.

Mit einer derartigen Verbindungsvorrichtung kann ein drahtloser Zugangspunkt zu einem Netzwerk bereitgestellt werden, durch den mit allen sich im Netzwerk befindenden Feldgeräten, und/oder ggf. weiteren Teilnehmern, Daten ausgetauscht werden können. Vorteilhafterweise entsteht durch dieses Konzept bzw. durch diese Vorrichtung zum einen kein zusätzlicher Verkabelungs- und Installationsaufwand. Ebenso kann es möglich werden, einen WLAN-Anschluss auch für Feldgeräte in explosionsgefährdeten Bereichen zur Verfügung zu stellen. Beispielsweise durch eine Integration eines WLAN-Access Points in ein Feldgerät kann das WLAN-Netzwerk mit geringem Aufwand flächendeckend auf die Feldebene erweitert werden. Wird als Feldgerätekommunikationsprotokoll Ethernet-APL (Ethernet Advanced Physical Layer) verwendet, so kann (im Prinzip), sobald man innerhalb des Netzwerks ist, mit allen Teilnehmern des Netzwerkes kommuniziert werden.

In einigen Ausführungsformen hat der Umsetzer Zugriff auf eine Feldgeräteliste mit einer Feldgeräteidentifikation des ersten Feldgeräts. Die Feldgeräteliste kann z.B. auf dem mobilen Gerät, dem Zugangsgerät und/oder einer Datenbank gespeichert sein. Die Feldgeräteidentifikation kann z.B. eine MAC-Adresse sein und/oder eine andere Identifikation, die zumindest für den Zugriffsbereich des Feldgerätenetzanschlusses eindeutig ist. Die Feldgeräteliste kann weitere Daten enthalten, die erforderlich und/oder nützlich sind, um auf das erste Feldgerät zugreifen zu können, z.B. eine Zugangsberechtigung zu dem Feldgerät und/oder weitere Informationen wie Format der Messdaten, parametrierbare Daten, usw.

Zumindest einige Netze oder Teilnetze können erhöhte Sicherheitsanforderungen (Security) aufweisen und beispielsweise nur über verschlüsselte Protokolle zugreifbar sein.
Im Ergebnis kann es möglich werden, dass nur einige Geräte - z.B. dedizierte Zugangsgeräte, APL-Sensoren und/oder andere Typen von Geräten - mit einem drahtlosen Zugangspunkt (z.B. mit WLAN AP) benötigt werden, um auf Feldebene ein weitläufiges WLAN-Netzwerk aufzubauen und es so dem Anwender zu ermöglichen, das Netzwerk einfach zu konfigurieren, zu diagnostizieren und/oder Messwerte zu erhalten.

In einigen Ausführungsformen weist die Feldgeräteliste weiterhin eine Zugriffsadresse und/oder eine Zugriffsberechtigung des ersten Feldgeräts auf. Eine Zugriffsadresse kann z.B. eine IP-Adresse umfassen. Durch die auf IP-Adressen basierte Kommunikation kann es möglich sein, jeden in dem Feldgerätenetz befindlichen Teilnehmer zu erreichen und Daten mit diesem auszutauschen. Die Zugriffsberechtigung kann z.B. kryptographische Schlüssel beinhalten. Dadurch kann für den Benutzer ein gewissermaßen barriereloser Zugang zu den Feldgeräten erzielt werden. Weiterhin kann die Feldgeräteliste auf dem mobilen Gerät und/oder dem Zugangsgerät angezeigt und/oder verändert werden, so dass der Benutzer einen aktuellen Überblick über die Feldgeräte erhalten kann, die z.B. für eine bestimmte Aufgabe für ihn relevant sind.

In einer Ausführungsform umfasst die Zugriffsberechtigung eine Mobilgeräteidentifikation des mobilen Geräts. Damit kann vorteilhafterweise gewährleisten werden, dass nur bestimmte mobile Geräte - z.B. Geräte eines Administrators - auf bestimmte Feldgeräte Zugriff haben.

In einigen Ausführungsformen unterstützt das Feldgerätenetz ein drahtgebundenes und/oder ein drahtloses Protokoll, und/oder unterstützt mindestens eines der Protokolle HART (Highway Addressable Remote Transducer) und/oder weitere Zweidrahtleitungsprotokolle, Ethernet-APL (Ethernet Advanced Physical Layer), ein Niedrigenergieweitverkehrnetzwerk (Low Power Wide Area Network, LPWAN), Profibus PA, Foundation Fieldbus, Modbus und/oder weitere Protokolle.

In einigen Ausführungsformen unterstützt die drahtlose Verbindung mindestens eines der Protokolle WLAN, Bluetooth, WirelessHART, ein Mobilfunknetz, z.B. 2G, 3G, 4G und/oder 5G, und/oder weitere Protokolle.

In einigen Ausführungsformen ist die Verbindungsvorrichtung in einem Zugangsgerät und/oder in einem zweiten Feldgerät angeordnet. Wenn in einem Feldgerätenetz nur eines der Feldgeräte (als zweites Feldgerät) einen WLAN-AP und/oder einen anderen drahtlosen Zugang aufweist, kann es mittels der Verbindungsvorrichtung möglich werden, auf sämtliche Feldgeräte in diesem Feldgerätenetz drahtlos zuzugreifen. Das zweite Feldgerät kann beispielsweise als Anzeigegerät ausgeführt sein.

In einigen Ausführungsformen ist die Feldgeräteliste in dem mobilen Gerät, dem Zugangsgerät, dem zweiten Feldgerät und/oder in einer Datenbank angeordnet. Das Zugangsgerät kann z.B. ein Feldgerät, ein PC, ein Switch, ein Laptop, ein Desktop-Computer und/oder ein weiterer Typ von Computern sein. Es kann eine Synchronisierung der Feldgerätelisten zwischen den verschiedenen Geräten stattfinden.

In einigen Ausführungsformen kann mittels der Feldgeräteliste und/oder einem Programm, das zu einem Zugriff auf die Feldgeräteliste eingerichtet ist - z.B. einer "App" auf einem Smartphone und/oder auf einem der zweiten Feldgeräte -, mindestens eines der ersten Feldgeräte für eine Kommunikation ausgewählt werden. Das Auswählen kann z.B. einen Zugriff auf das erste Feldgerät umfassen, und z.B. das Anzeigen von Messwerte beinhalten, eine Parametrierung, und/oder weitere Aktionen.

Ein Aspekt betrifft eine Verwendung einer Verbindungsvorrichtung wie oben und/oder nachfolgend beschrieben zur drahtlosen Kommunikation und/oder zur Fernbedienung eines Feldgeräts mittels eines mobilen Geräts. Das Feldgerät kann beispielsweise zur Füllstandmessung, zur Grenzstandbestimmung, zur Durchflussmessung, zur Druckmessung, zur Temperaturmessung und/oder zur Messwertanzeige eingerichtet sein. Die drahtlose Kommunikation und/oder Fernbedienung des Feldgeräts kann ein Auslesen von Feldgerätewerten, von Diagnosewerten und/oder eines Ereignis- und Messwertspeichers, eine Messwertübertragung, ein Parametrieren, eine Steuerung, ein Software-Update und/oder weitere Aktionen umfassen.

Ein Aspekt betrifft ein Verfahren zur drahtlosen Verbindung eines mobilen Geräts mit einem ersten Feldgerät. Das Verfahren weist folgende Schritte auf:
Anschließen des ersten Feldgeräts an ein Feldgerätenetz;
Eintragen einer Feldgeräteidentifikation des ersten Feldgerät in eine Feldgeräteliste auf die eine
Verbindungsvorrichtung, z.B. über einen Umsetzer, Zugriff hat, wobei die Verbindungsvorrichtung, z.B. über einen Feldgerätenetzanschluss, in Kommunikation mit dem ersten Feldgerät steht;
Verbinden des mobilen Geräts mit der Verbindungsvorrichtung; und
verbinden des mobilen Geräts, mittels der Verbindungsvorrichtung, z.B. über einen Zugangspunkt, mit dem ersten Feldgerät.

Ein Aspekt betrifft ein Programmelement, welches, wenn es auf einer Prozessoreinheit eines Zugangsgeräts oder Feldgeräts mit einer Verbindungsvorrichtung wie oben und/oder nachfolgend beschrieben ausgeführt wird, die Prozessoreinheit anleitet, das Verfahren wie oben und/oder nachfolgend beschrieben durchzuführen.

Ein Aspekt betrifft ein Programmelement, welches, wenn es auf einer Prozessoreinheit eines mobilen Geräts ausgeführt wird, die Prozessoreinheit anleitet, mittels einer Verbindungsvorrichtung wie oben und/oder nachfolgend beschrieben, das mobile Gerät mit einem ersten Feldgerät zu verbinden. Das Programmelement kann beispielsweise als sog. "App" gestaltet sein und eine Steuerung und/oder sonstige Kommunikation mit dem Feldgerät ermöglichen.

Ein Aspekt betrifft ein computerlesbares Medium, auf dem das genannte Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Es zeigt:
- **Fig. 1**: eine schematische Skizze eines Netzwerks mit einer Verbindungsvorrichtung gemäß einer Ausführungsform;
- **Fig. 2**: schematisch eine Verbindungsvorrichtung gemäß einer Ausführungsform;
- **Fig. 3**: ein Verfahren gemäß einer Ausführungsform.

### Detaillierte Beschreibung von Ausführungsformen

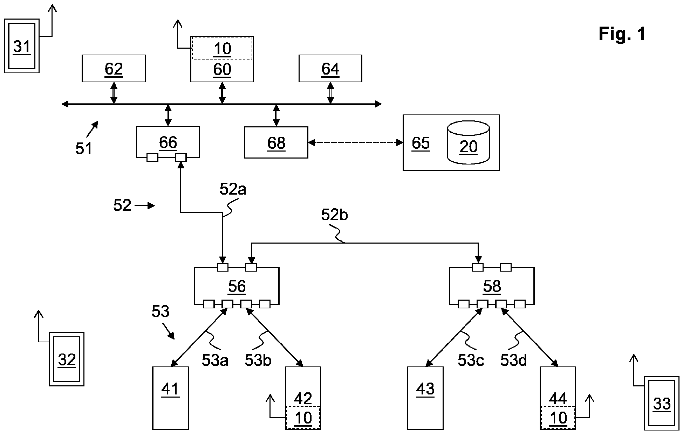

**Fig. 1** zeigt eine schematische Skizze eines Netzwerks mit einer Verbindungsvorrichtung 10 gemäß einer Ausführungsform. Das gezeigte beispielhafte Netzwerk weist drei Teilnetzwerke 51, 52, 53 auf. Es ist möglich, dass zumindest eines der Teilnetzwerke 51, 52, 53 als ein drahtloses Teilnetzwerk ausgeführt ist. Das Teilnetzwerk 51 kann z.B. als Ethernet-basiertes industrielles Netzwerk ausgeführt sein. Das Teilnetzwerk 51 kann z.B. ein Leitsystem oder Leitwarte 62 eines Anlagenbetreibers aufweisen, das zur Steuerung einer Anlage eingerichtet ist. Die Anlage kann Feldgeräte umfassen, z.B. Feldgeräte zur Füllstandmessung, zur Grenzstandbestimmung, zur Durchflussmessung, zur Druckmessung, zur Temperaturmessung, zur Messwertanzeige und/oder weitere industrielle Feldgeräte. Das Teilnetzwerk 51 kann weiterhin einen Wartungszugang 64 aufweisen. Ferner kann das Teilnetzwerk 51 z.B. ein Warenwirtschaftssystem 68 (Inventory System) aufweisen. Das Warenwirtschaftssystem 68 kann z.B. an eine Datenbank 65 angeschlossen sein und/oder diese umfassen. Das Teilnetzwerk 51 kann ein Zugangsgerät 60 umfassen, das die Verbindungsvorrichtung 10 aufweist, z.B. mit einem WLAN-AP, einem Bluetooth-Zugang und/oder einem Anschluss an ein Mobilfunknetz. Das Zugangsgerät 60 kann als eigenständiges Gerät konzipiert sein, oder auch als ein Modul, das z.B. in dem Leitsystem 62 oder dem Warenwirtschaftssystem 68 integriert ist.

Das Teilnetzwerk 51 kann ferner einen Switch oder ein Gateway 66 (Field Power Switch) umfassen, das zum Beispiel an ein oder mehrere weitere Teilnetzwerke angeschlossen ist, z.B. an ein Feldgerätenetz 52. Das Feldgerätenetz 52 kann seinerseits mehrere Teilnetzwerke umfassen, z.B. 52a und 52b. Die Teilnetzwerke 52a und 52b können z.B. als sog. Ethernet-APL Trunk ausgeführt sein, welche eine Reichweite bis zu 1000 m unterstützen. An die Teilnetzwerke 52a und 52b können Feldgeräte angeschlossen sein (nicht dargestellt). Im gezeigten beispielhaften Netzwerk verbindet Teilnetzwerk 52a den Switch 66 mit einem ersten Feld-Switch 56 (Field Switch #1). Der erste Feld-Switch 56 ist über das Teilnetzwerk 52b mit einem zweiten Feld-Switch 58 (Field Switch #2) verbunden.

An die Feld-Switches 56 und 58 können über das Teilnetzwerk 53 Feldgeräte (Field Devices) angeschlossen sein. So können z.B. das Feldgerät 41 und 42 jeweils über ein sog. Ethernet-APL Spur an den ersten Feld-Switch 56 und das Feldgerät 43 und 44 an den zweiten Feld-Switch 58 angeschlossen sein. Das Ethernet-APL Spur unterstützt eine Reichweite bis zu 200 m.

Das gezeigte beispielhafte Netzwerk weist drei Geräte mit der mit Verbindungsvorrichtung 10 auf: Das Zugangsgerät 60, z.B. mit einem WLAN-, Bluetooth- oder Mobilfunknetz-Zugangspunkt (Access Point, AP), und die Feldgeräte 42 und 44, z.B. mit einem WLAN- oder WirelessHART-Zugang. Für andere Netze und/oder Geräte können andere Zugänge (APs) implementiert sein. Wenn z.B. ein mobiles Gerät 33 auf das Feldgerät 43 zugreifen will, so ist dies direkt nicht möglich, weil das Feldgerät 41 keinen drahtlosen Zugang aufweist. Wenn jedoch das mobile Gerät 33 WLAN unterstützt und das Feldgerät 44 die Verbindungsvorrichtung 10 mit einem WLAN-AP aufweist, dann kann das mobile Gerät 33 auf das Feldgerät 43 über die die Verbindungsvorrichtung 10 von Feldgerät 44 und die Teilnetze 53d und 53c zugreifen. Darüber hinaus kann das mobile Gerät 33, über die Teilnetze 52b und 53a bzw. 53b, auch auf die Feldgeräte 41 und 42 zugreifen. In analoger Weise kann auch das mobile Gerät 32 auf die Feldgeräte 41 bis 44 zugreifen, z.B. über die Verbindungsvorrichtung 10 von Feldgerät 42 oder 44. Wenn das Zugangsgerät 60 einen Mobilfunknetz-Zugang aufweist, dann kann auch ein mobiles Gerät 31, über die Verbindungsvorrichtung 10 von Zugangsgerät 60 und die Teilnetze 51, 52, 53 und die Switches 66, 56, ggf. 58, auf die Feldgeräte 41 bis 44 zugreifen. So kann sich in Bild 1 ein Anwender mit einem beliebigen drahtlosen AP verbinden und so Zugang zu allen Teilnehmern des Netzwerkes erhalten. Er kann sich z.B. mit dem WLAN-AP des Feldgeräts 42 verbinden und das weiter entfernte Feldgerät 43, welches über keinen eigenen WLAN Zugang verfügt, konfigurieren. Auch kann ein Anwender welcher im Feld mit einem AP eines Field Feldgeräts verbunden ist auf unterstützende Systeme innerhalb des Netzwerkes zugreifen wie z.B. auf das Warenwirtschaftssystem 68.

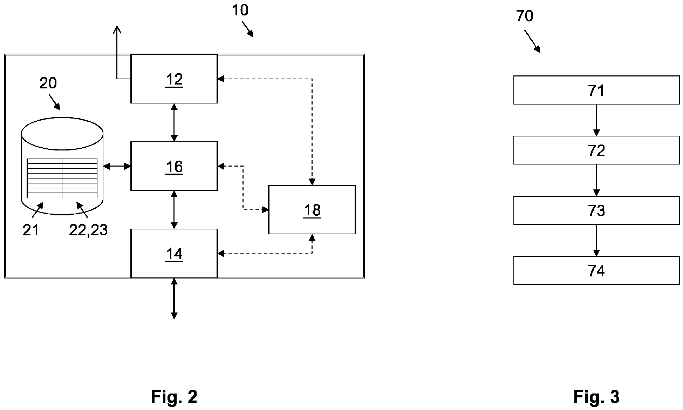

**Fig. 2** zeigt schematisch eine Verbindungsvorrichtung 10 gemäß einer Ausführungsform. Die Verbindungsvorrichtung 10 weist einen Zugangspunkt 12 auf, der zur Unterstützung eines drahtlosen Kommunikationsprotokolls eingerichtet ist. Weiterhin weist die Verbindungsvorrichtung 10 einen Feldgerätenetzanschluss 14 auf, der zur Unterstützung eines Feldgerätekommunikationsprotokolls eingerichtet ist. Ferner weist die Verbindungsvorrichtung 10 einen Umsetzer 16 auf, der zur Übertragung von Daten von dem Zugangspunkt 12 zu dem Feldgerätenetzanschluss 14 und von Daten von dem Feldgerätenetzanschluss 14 zu dem Zugangspunkt 12 eingerichtet ist. Der Umsetzer 16 hat Zugriff auf eine Feldgeräteliste 20 mit einem Array, bei dem jeder Eintrag bzw. jede Zeile erste Feldgeräte, z.B. Feldgeräte 41 und 43 von **Fig. 1**, spezifiziert. Jeder Eintrag bzw. jede Zeile kann z.B. eine Feldgeräteidentifikation 21, eine Zugriffsadresse 22, eine Zugriffsberechtigung 23 und/oder weitere Einträge zu den Feldgeräten 41 und 43 umfassen. Eine Prozessoreinheit 18 ist zur Steuerung der Komponenten der Verbindungsvorrichtung 10 eingerichtet, z.B. zur Steuerung von Zugangspunkt 12, Feldgerätenetzanschluss 14, Umsetzer 16 und/oder weiteren Komponenten. Die Feldgeräteliste 20 kann Teil der Verbindungsvorrichtung 10 sein, z.B. als Teil des Speichers der Prozessoreinheit 18. Alternativ oder zusätzlich kann die Feldgeräteliste 20 in einem der mobilen Geräte 31, 32, 33, dem Zugangsgerät 60, dem zweiten Feldgerät 42, 44 und/oder in einer Datenbank 65 angeordnet sein. Wenn die Feldgeräteliste 20 auf mehreren Geräten angeordnet ist, dann kann eine Synchronisation der Feldgerätelisten nützlich und/oder erforderlich sein.

**Fig. 3** zeigt ein Flussdiagramm 70 mit einem Verfahren zur drahtlosen Verbindung eines mobilen Geräts 31, 32, 33 (siehe z.B. **Fig. 1** oder **2**) mit einem ersten Feldgerät 41, 43. In einem Schritt 71 wird das erste Feldgerät 41, 43 an ein Feldgerätenetz 51, 52, 53 angeschlossen. In einem Schritt 72 wird eine Feldgeräteidentifikation 21 des ersten Feldgerät 41, 43 in eine Feldgeräteliste 20 eingetragen, auf die eine Verbindungsvorrichtung 10 Zugriff hat, wobei die Verbindungsvorrichtung 10 in Kommunikation mit dem ersten Feldgerät 41, 43 steht. Das Eintragen in die Feldgeräteliste 20 kann z.B. über einen Umsetzer 16 der Verbindungsvorrichtung 10 erfolgen. Die Kommunikation mit dem ersten Feldgerät 41, 43 kann z.B. über einen Feldgerätenetzanschluss 14 erfolgen. In einem Schritt 73 wird das mobile Gerät 31, 32, 33 mit der Verbindungsvorrichtung 10 verbunden. In einem Schritt 74 wird das mobile Gerät 31, 32, 33, mittels der Verbindungsvorrichtung 10, z.B. über einen Zugangspunkt 12, mit dem Feldgerät 41, 42, 43, 44 verbunden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 10: Verbindungsvorrichtung
- 12: Zugangspunkt
- 14: Feldgerätenetzanschluss
- 16: Umsetzer
- 18: Prozessoreinheit
- 20: Feldgeräteliste
- 21: Feldgeräteidentifikation
- 22: Zugriffsadresse
- 23: Zugriffsberechtigung
- 31, 32, 33: mobiles Gerät
- 41, 43: erstes Feldgerät
- 42, 44: zweites Feldgerät
- 51, 52, 53: Teilnetzwerke
- 60: Zugangsgerät
- 62: Leitsystem, Leitwarte
- 64: Wartungszugang
- 65: Datenbank
- 66: Gateway, Switch
- 68: Warenwirtschaftssystem
- 70: Flussdiagramm
- 71 - 74: Schritte

## Patentansprüche

1. Verbindungsvorrichtung (10) zur drahtlosen Verbindung eines mobilen Geräts (31, 32, 33) mit einem ersten Feldgerät (41, 43), das in einem Feldgerätenetz (51, 52, 53) angeordnet ist, wobei die Verbindungsvorrichtung (10) eine Kommunikationsverbindung zu dem Feldgerätenetz (51, 52, 53) aufweist, die Verbindungsvorrichtung (10) aufweisend:
einen Zugangspunkt (12), eingerichtet zur Unterstützung eines drahtlosen Kommunikationsprotokolls;
einen Feldgerätenetzanschluss (14), eingerichtet zur Unterstützung eines Feldgerätekommunikationsprotokolls des Feldgerätenetzes (51, 52, 53); und
einen Umsetzer (16), eingerichtet zur Übertragung von Daten von dem Zugangspunkt (12) zu dem Feldgerätenetzanschluss (14) und von Daten von dem Feldgerätenetzanschluss (14) zu dem Zugangspunkt (12).

2. Verbindungsvorrichtung (10) nach Anspruch 1,
wobei der Umsetzer (16) Zugriff auf eine Feldgeräteliste (20) mit einer Feldgeräteidentifikation (21) des ersten Feldgeräts (41, 43) hat.

3. Verbindungsvorrichtung (10) nach Anspruch 2,
wobei die Feldgeräteliste (20) weiterhin eine Zugriffsadresse (22) und/oder eine Zugriffsberechtigung (23) des ersten Feldgeräts (41, 43) aufweist.

4. Verbindungsvorrichtung (10) nach Anspruch 3,
wobei die Zugriffsberechtigung (23) eine Mobilgeräteidentifikation des mobilen Geräts (31, 32, 33) umfasst.

5. Verbindungsvorrichtung (10) nach einem der vorhergehenden Ansprüche,
wobei das Feldgerätenetz (51, 52, 53) ein drahtgebundenes und/oder ein drahtloses Protokoll unterstützt,
und/oder mindestens eines der Protokolle HART, Ethernet-APL, ein Niedrigenergieweitverkehrnetzwerks, LPWAN, Profibus PA, Foundation Fieldbus, Modbus und/oder weitere Protokolle unterstützt.

6. Verbindungsvorrichtung (10) nach einem der vorhergehenden Ansprüche,
wobei die drahtlose Verbindung mindestens eines der Protokolle WLAN, Bluetooth, WirelessHART, ein Mobilfunknetz und/oder weitere Protokolle unterstützt.

7. Verbindungsvorrichtung (10) nach einem der vorhergehenden Ansprüche,
wobei die Verbindungsvorrichtung (10) in einem Zugangsgerät (60) und/oder einem zweiten Feldgerät (42, 44) angeordnet ist.

8. Verbindungsvorrichtung (10) nach einem der vorhergehenden Ansprüche,
wobei die Feldgeräteliste (20) in dem mobilen Gerät (31, 32, 33), dem Zugangsgerät (60), dem zweiten Feldgerät (42, 44) und/oder in einer Datenbank (65) angeordnet ist.

9. Verbindungsvorrichtung (10) nach einem der vorhergehenden Ansprüche,
wobei mittels der Feldgeräteliste (20) und/oder einem Programm, das zu einem Zugriff auf die Feldgeräteliste (20) eingerichtet ist, mindestens eines der ersten Feldgeräte (41, 43) für eine Kommunikation ausgewählt werden kann.

10. Verwendung einer Verbindungsvorrichtung (10) nach einem der vorhergehenden Ansprüche zur drahtlosen Kommunikation und/oder zur Fernbedienung eines Feldgeräts (41, 43) mittels eines mobilen Geräts (31, 32, 33).

11. Verwendung nach Anspruch 10,
wobei die drahtlose Kommunikation und/oder Fernbedienung des Feldgeräts (41, 43) ein Auslesen von Feldgerätewerten, von Diagnosewerten und/oder eines Ereignis- und Messwertspeichers, ein Parametrieren und/oder ein Software-Update umfasst.

12. Verfahren zur drahtlosen Verbindung eines mobilen Geräts (31, 32, 33) mit einem ersten Feldgerät (41, 43), aufweisend die Schritte:
anschließen des ersten Feldgeräts (41, 43) an ein Feldgerätenetz (51, 52, 53);
eintragen einer Feldgeräteidentifikation (21) des ersten Feldgerät (41, 43) in eine Feldgeräteliste (20), auf die eine Verbindungsvorrichtung (10) Zugriff hat, wobei die Verbindungsvorrichtung (10) in Kommunikation mit dem ersten Feldgerät (41, 43) steht;
verbinden des mobilen Geräts (31, 32, 33) mit der Verbindungsvorrichtung (10); und
verbinden des mobilen Geräts (31, 32, 33), mittels der Verbindungsvorrichtung (10), mit dem ersten Feldgerät (41, 42, 43, 44).

13. Programmelement, welches, wenn es auf einer Prozessoreinheit (18) eines Zugangsgeräts (60) oder Feldgeräts (42, 44) mit einer Verbindungsvorrichtung (10) nach einem der Ansprüche 1 bis 9 ausgeführt wird, die Prozessoreinheit (18) anleitet, das Verfahren nach Anspruch 12 durchzuführen.

14. Programmelement, welches, wenn es auf einer Prozessoreinheit eines mobilen Geräts (31, 32, 33) ausgeführt wird, die Prozessoreinheit anleitet, mittels einer Verbindungsvorrichtung (10) nach einem der Ansprüche 1 bis 9, das mobile Gerät (31, 32, 33) mit einem ersten Feldgerät (41, 42, 43, 44) zu verbinden.

15. Computerlesbares Medium, auf dem ein Programmelement nach Anspruch 13 oder 14 gespeichert ist.

16. Zugangsgerät (60) oder Feldgerät (42, 44), aufweisend eine Verbindungsvorrichtung (10) nach einem der Ansprüche 1 bis 9 und/oder dazu eingerichtet, ein Verfahren nach Anspruch 12 durchzuführen.
